# EUROPEAN PATENT SPECIFICATION

(11) **EP 2 421 217 B1**
(45) Date of publication and mention of the grant of the patent: **02.10.2013**
(21) Application number: 10172949.9
(22) Date of filing: 16.08.2010
(51) Int. Cl.: H04L 29/06, G06F 21/00

(54) **Communication system providing wireless authentication for private data access and related method**
Kommunikationssystem mit drahtloser Authentifizierung für den privaten Datenzugriff und zugehöriges Verfahren
Système de communication fournissant une authentification sans fil pour un accès privé aux données et procédé associé

(43) Date of publication of application: 22.02.2012
(73) Proprietor: BlackBerry Limited, Waterloo ON N2L 3W8 (CA)
(72) Inventor: Moosavi, Vahid, Waterloo Ontario N2L 3W8 (CA); Griffin, Jason Tyler, Waterloo Ontario N2L 3W8 (CA)
(74) Representative: Roberts, Gwilym Vaughan

(56) References cited:
- EP-A1- 2 166 697
- WO-A1-2009/127984
- WO-A2-2009/101549

## Description

### Technical Field

The present disclosure relates generally to the field of communications systems, and, more particularly, to authentication techniques for communication systems and related methods.

### Background

Mobile wireless communications systems continue to grow in popularity and have become an integral part of both personal and business communications. For example, cellular telephones allow users to place and receive voice calls from almost anywhere they travel. Moreover, as cellular telephone technology has increased, so too has the functionality of cellular devices and the different types of devices available to users. For example, many cellular devices now incorporate personal digital assistant (PDA) features such as calendars, address books, task lists, etc. Moreover, such multi-function devices may also allow users to wirelessly send and receive electronic mail (email) messages and access the Internet via a cellular network and/or a wireless local area network (WLAN), for example. Even so, the use of computer terminals still remains prevalent, and users often utilize both computer terminals and wireless devices for accessing personal or private data over such networks.

WO2009/101549 is directed to a registration method of a user with a service provider, comprising the steps of creating and storing on a mobile device at least one digital identity, establishing a communication between the mobile device and the service provider, exchanging information between the mobile device and the service provider in order to generate some secret data associated both to a chosen digital identity and to the service provider, and storing the secret data both on the mobile device and at the service provider. An authentication method comprises the steps of creation by the service provider a challenge containing a service provider identifier, encoding of the challenge, delivering the encoded challenge to the user, acquiring the challenge through the mobile device, extracting the service provider identifier and automatically selecting of the digital identity registered with the service provider, and generating a response to the challenge and sending the response back to the service provider together with the identifier of the chosen digital identity.

WO2009/127984 discloses an apparatus for authenticating communications between a user computer (2) and a server (3) via a data communications network (4). A security device (6) of the apparatus has memory (10) containing security data, and security logic (12) adapted to use the security data to generate an authentication response to an authentication message received from the server (3) in use. An interface device (7) of the apparatus is adapted for data communications with the security device (6). The interface device (7) has a receiver (17) for receiving from the user computer (2) an authentication output containing the authentication message sent by the server (3) to the user computer in use, and interface logic (19) adapted to extract the authentication message from the authentication output and to send the authentication message to the security device (6). The apparatus includes a communications interface (16) for connecting to the server (3) via a communications channel bypassing the user computer (2). One of the security device (6) and interface device (7) is adapted for sending the authentication response to the server (3) via the communications channel bypassing the user computer.

EP 2166697 discloses a method for authenticating a user of a mobile device (10) against a remote authenticating system (30) which is connected to a client computer accessible to the user, which comprises: reading a 2D-code displayed to the client computer (40) by means of a 2D-code reader provided in the mobile device, a URL address of the authenticating system and a codified challenge generated by authenticating system being embedded in the 2D-code; processing the codified challenge and computing a response to it using a personal secret, which is a string of characters univocally related to a user identifier (user ID) of the user of the mobile device and to a time stamp; sending a message to the authenticating system which includes a tuple (100) whose elements are the user ID, the challenge and its response; analyzing the tuple elements and determining the tuple is valid if the response to the challenge has been generated using the personal secret of the user whose user identifier is in the tuple for a given period of time, and in case the tuple is valid: checking in a users list (300) in the authenticating system if the user identifier in the tuple is in the users list, and if the user identifier is in the users list, it is verified if the challenge in the tuple is in a session list in the authenticating system, and if the challenge is in the session list, the authenticating system pushes a welcome screen to the client computer that corresponds to a session identification number in the session list where the challenge is.

Aspects of the invention are set out in the accompanying claims.

### Brief Description of the Drawings

FIG. 1 is schematic block diagram of a communication system providing wireless logon authentication features in accordance with one aspect.

FIG. 2 is a perspective diagram of a computer terminal display and mobile wireless communications device of the system of FIG. 1 showing authentication data exchange via optical reading.

FIG. 3 is a flow diagram illustrating method aspects associated with the system of FIG. 1.

FIG. 4 is a schematic block diagram illustrating additional components that may be included in the mobile wireless communications device of the system of FIG. 1.

### Detailed Description

The present description is made with reference to the accompanying drawings, in which example embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a communication system is provided herein which may include a server configured to provide access based upon an authenticated logon, and a computer configured to access the server and to receive a temporary authenticated logon identification (ID) for the server. The communication system may further include a mobile wireless communications device including a portable housing, a wireless transceiver carried by the portable housing, a sensor carried by the portable housing, and a controller carried by the portable housing and coupled to the wireless transceiver and the sensor. The controller may be configured to cause the sensor to wirelessly retrieve the temporary authenticated logon ID from the computer terminal, and cause the wireless transceiver to wirelessly communicate logon data via a wireless communications network for authenticating logon to the server for data access using the computer terminal based upon the temporary authenticated logon ID. As such, the mobile wireless communications device may advantageously be used to securely provide logon credentials for using a public or other computer terminal which may not necessarily be secure.

More particularly, the sensor may comprise a near field communication (NFC) sensor, and the computer and NFC sensor may be configured to communicate the temporary authenticated logon ID therebetween via NFC communications. In accordance with another example, the communication system may further include a display coupled to the computer, and the computer may be further configured to cause the display to display an optical pattern representing the temporary authenticated logon ID. Further, the sensor may comprise an optical sensor, and the controller may be further configured to cause the optical sensor to read the optical pattern from the display and determine the temporary authenticated logon ID therefrom.

By way of example, the temporary authentication logon ID may comprise a pseudorandom password. In addition, the temporary authentication logon ID may comprise an Internet Protocol (IP) address associated with at least one of the server and the computer.

A related mobile wireless communications device, such as the one described briefly above, a related computer-readable medium for a mobile wireless communications device, and a related communications method are also provided. The method may include accessing a server configured to provide data access based upon an authenticated logon from a computer over a wide area network to receive a temporary authenticated logon identification (ID) for the server. The method may further include wirelessly retrieving the temporary authenticated logon ID from the computer to a mobile wireless communications device, and wirelessly communicating the logon data from the mobile wireless communications device via a wireless communications network and authenticating logon to the server for data access using the computer based upon the temporary authenticated logon ID.

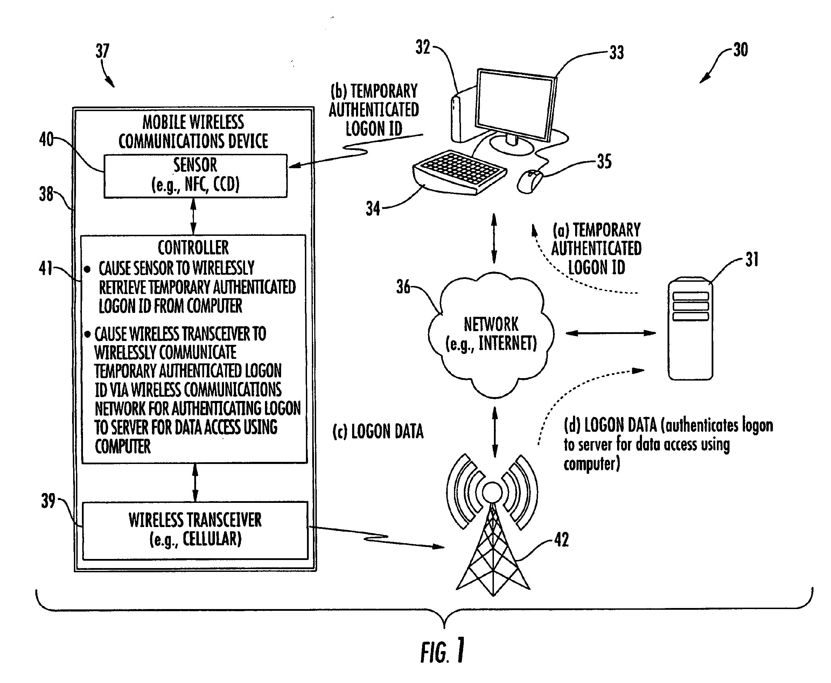

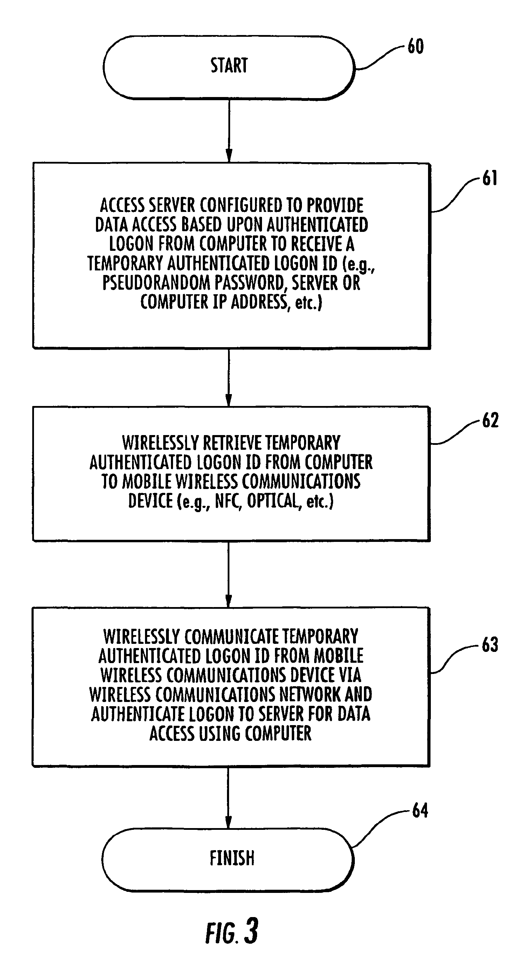

Referring initially to FIGS. 1 and 3, a communications system **30** illustratively includes a server **31** configured to provide data access (e.g., to private data) based upon an authenticated logon, and a computer or computer terminal **32** configured to access the server, at Blocks **60-61.** In the illustrated example, a display **33,** keyboard **34,** and a mouse **35** are associated with the computer terminal **32,** although other input or output devices may be used. By way of example, the computer terminal **32** may comprise a desktop computer, a laptop computer, a tablet PC, a PC, a Mac, a network workstation, etc. By way of example the computer terminal **32** may be locked in a public environment, such as a library, an airport, a bus station, a hotel, a guest office, etc.

The server **31** and computer terminal **32** may communicate via a network **36,** such as the Internet, for example. In some applications, the computer terminal **32** may be a public computing terminal used by many users, or in a shared environment where the computer terminal **32** is not under a given user's control. As such, this may be a concern because of the existence of programs such as keyloggers, which can record keystrokes in the background and unbeknownst to a user. As such, a user may risk having sensitive information, such as account passwords, stolen by using such computer terminals. Concern for keyloggers or other similar programs may cause users to have to change their passwords after each time such a computer terminal is used. Furthermore, it can be difficult to remember each new password. This difficulty is further compounded when different passwords associated with multiple accounts are used. Furthermore, some users may be forced to avoid such computer terminals altogether, which may be impractical in some circumstances.

As such, the server **31** may advantageously provide a temporary authenticated logon identification (ID) when the computer terminal **32** logs on to request access to private data. For example, if a user logs on to a particular Internet site to check email messages (e.g., Gmail, Yahoo! Mail, etc.), the user is typically required to provide a user name and password to access private information associated with the particular Internet site. Other examples may include online banking, checking stocks or 401K online, online gaming, checking in to a flight, social networking sites such as Facebook, Twitter MySpace, shopping online, photosharing sites such a Flickr, Youtube, etc.

In accordance with the present example, a user may instead only be required to provide an indication of who he or she is (such as a user name) via the computer terminal **32** from which access is desired to receive the temporary authenticated logon ID, but not his or her password. Instead, a mobile wireless communications device **37** (also referred to as a "mobile device" herein) is used for authentication purposes to circumvent the possibility of a password or passcode being compromised by a keylogger program, for example.

More particularly, the mobile device **37** illustratively includes a portable housing **38,** a wireless transceiver **39** carried by the portable housing **38,** a sensor **40** carried by the portable housing **38,** and a controller **41** carried by the portable housing **38,** the controller **41** being coupled to the wireless transceiver **39** and the sensor **40.** By way of example, the wireless transceiver **39** may communicate via a cellular, wireless local area network (WLAN), WiMAX, or other suitable format. Example types of mobile devices **37** which may be used include portable or personal media players (e.g., MP3 players, video players, etc.), portable gaming devices, portable or mobile telephones, smartphones, etc.

Generally speaking, the controller **41** may be configured to cause the sensor **40** to wirelessly retrieve the temporary authenticated logon ID from the computer terminal **32,** at Block **62.** Moreover, the controller **41** causes the wireless transceiver **39** to wirelessly communicate logon data via a wireless communications network (illustratively represented by a communications tower **42** in FIG. 1) for authenticating logon to the server **31** for private data access using the computer terminal **32** based upon the temporary authenticated logon ID, at Block **63,** thus concluding the method illustrated in FIG. 3 (Block **64).**

Stated alternatively, upon wirelessly receiving the temporary authentication logon ID from the computer terminal **32,** the controller **41** is able to either forward the temporary authentication logon ID back to the server **31,** or generate other authentication data based upon the temporary authentication logon ID (e.g., the logon ID could be used as a key or seed for an encryption algorithm, etc.). Because the mobile device **40** is associated with a particular user, as is the user name for the server **31** account, when the server provides the temporary authentication logon ID responsive to the user name the server **31** is aware that the mobile device **37** is authorized to provide a response, the server **31** is also aware of what the response is supposed to be. This is because the response is based upon the temporary authentication logon ID. In this way, the mobile device **37** may advantageously be used to securely provide logon credentials for using the computer terminal **32,** and thus avoid the necessity for the user to input the user's password directly to the computer terminal and risk compromise of the password through key logging, etc.

In accordance with one example implementation, the sensor **40** may comprise a near field communication (NFC) sensor, and the computer terminal **32** may comprise another NFC sensor configured to communicate the temporary authenticated logon ID to the NFC sensor of the mobile device **37** via NFC communications. NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

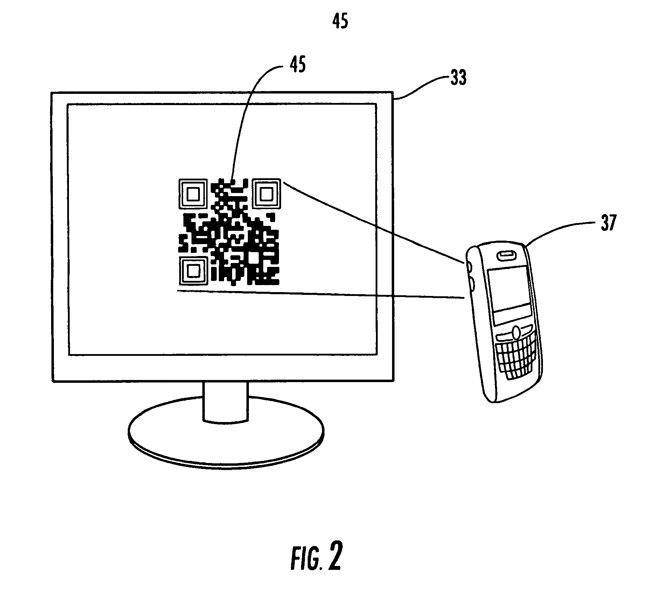

Turning now additionally to FIG. 2, in accordance with one example aspect, the computer terminal **32** may be further configured to cause the display **33** to display an optical pattern **45** representing the temporary authenticated logon ID. In the illustrated example, the optical pattern **45** comprises a quick response (QR) barcode, but other types of barcodes or optical machine-readable representations of data may be used in different embodiments to represent the temporary authentication logon ID. As such, the sensor **40** may comprise an optical sensor, such as a charge-coupled device (CCD) from a digital camera implemented on the mobile device **37.** The controller **41** may accordingly be further configured to cause the optical sensor **38** to read the optical pattern **45** from the display **33** as shown, and determine the temporary authenticated logon ID from the optical pattern **45.**

By way of example, the temporary authentication logon ID may comprise a pseudorandom password. In addition, the temporary authentication logon ID may comprise an Internet Protocol (IP) address associated with the server **31** or the computer terminal **32** (or both). Generally speaking, the authentication logon ID will be temporary so that it is not valid for multiple logon sessions, to therefore help prevent the possibility of unauthorized access to private data accounts.

In some embodiments, the server **31** may be configured as an intermediary authentication server for other servers which store the private data. For example, the server **31** may store logon credentials for one or more accounts (e.g., Gmail, Yahoo! Mail, etc.), and it handles the logon and interface operations for a given user to access his or her private data on these various other servers once the user properly establishes a session with the server **31** based upon the temporary authentication logon ID. This may advantageously provide a convenient central point for a user to access one or more private data account. This may also alleviate the user from the burden of having to continuously create and keep track of multiple different passwords. Also, this may avoid the need for generating multiple different temporary authenticated logon ID passwords for different accounts, although this may be done if desired in some embodiments.

The foregoing will be further understood with reference to an example implementation using a secure mobile device network (e.g. a cellular network) to securely and conveniently logon to online accounts through a computer terminal **32** that may be compromised with trojans, key loggers, etc. In the example embodiment, a user provides the computer terminal **32** with the web address for the server **31,** the server **31** is enabled to provide the temporary authentication logon ID via a browser on the computer terminal **32,** for example. Then, instead of providing the user's password, the user clicks on a link or button to access the wireless logon authentication process.

At this point, the server **31** creates the temporary authentication logon ID, which may take the form of a string that holds a one-time temporary password, an IP address of the computer terminal **32,** a Web address of the server **31,** etc. As discussed above, the temporary authentication ID may either be shown as an optical pattern on the display **41,** or made available from the computer terminal **32** via NFC, etc. The user thus swipes his or her mobile device **37** for NFC communication (or holds the mobile device in front of the optical pattern **45** on the display so it is viewable by the digital camera CCD) to read the temporary authentication logon ID created by the server **31.**

An application on the mobile device **37** executable by the controller **41** uses the temporary authentication logon ID to contact the server **31,** along with an identifer of the mobile device (e.g., a mobile device PIN, email address, etc.) to authenticate logon for private data access using the computer terminal **32.** The server **31** and computer terminal **32** may then cooperate to provide a button or link to logon to the desired account without entering his or her password. In embodiments where the mobile device **37** email address, PIN, etc. is registered with the server **31,** the server may send a temporary authentication login ID directly to the mobile device **37.**

In accordance with another aspect, the following may occur: 1) the mobile device **37** receives (e.g., via NFC or via optical sensor) an identifier (e.g., an IP address) associated with the computer terminal **32;** 2) the mobile device **37** sends the identifier of the computer terminal **32** to the server **31;** 3) the mobile device **37** instructs the server **31** to send an item (e.g., an email) associated with an account (e.g. a Gmail account) to the computer terminal **32;** 4) the computer terminal **32** receives the item (e.g., the email) associated with the account (e.g., the Gmail account) from the server **31;** and 5) the computer terminal **32** displays the item (e.g., the email). In a related example embodiments, in step (1) above, the mobile device **37** may receive the identifier associated with the computer terminal **32** when the mobile device **37** is brought proximate to the computer terminal **32.** Another example is that in step (3), the mobile device **37** may instruct the server **31** to provide the computer terminal **32** with temporary access to the account. In another example embodiment, the temporary access to the account may be revoked when the mobile device **37** moves away from the computer terminal **32.** Furthermore, steps (2) and (3) may be combined. That is, the mobile device **37** may simultaneously send to the server **31** the identifier of the computer terminal **32** and the account to which the computer terminal **32** can be provided access to. This aspect also provides the advantage of the user not having to enter logon credentials on the computer terminal **32.**

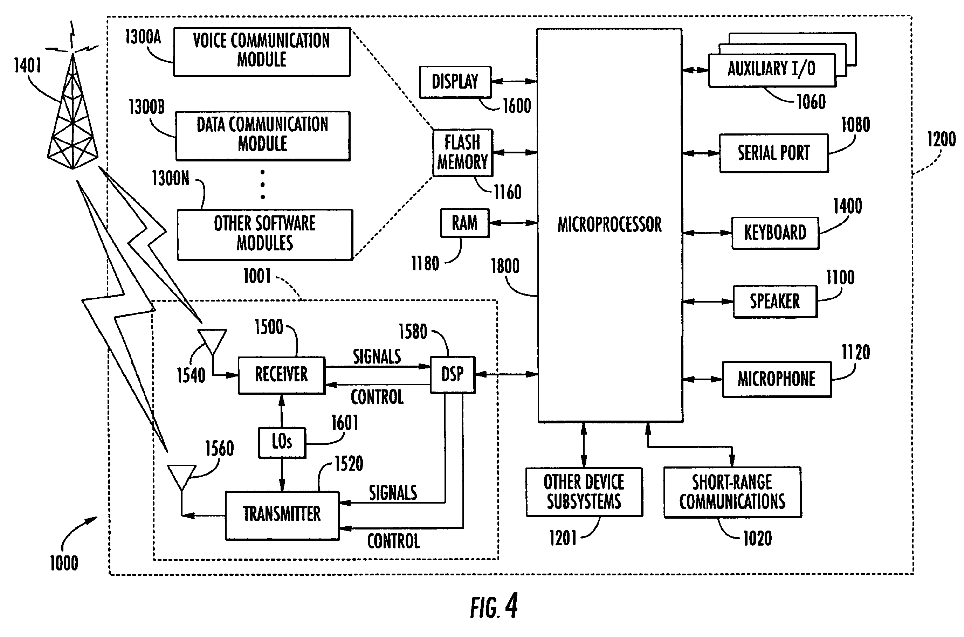

Example components that may be used in various embodiments of the above-described mobile wireless communications device are now described with reference to an example mobile wireless communications device 1000 shown in FIG. 4. The device **1000** illustratively includes a housing **1200,** a keyboard or keypad **1400** and an output device **1600.** The output device shown is a display **1600,** which may comprise a full graphic LCD. In some embodiments, display **1600** may comprise a touch-sensitive input and output device. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures, for example). The keypad **1400** may include a mode selection key, or other hardware or software for switching between text entry and telephony entry.

In addition to the processing device **1800,** other parts of the mobile device **1000** are shown schematically in FIG. 4. These include a communications subsystem **1001**; a short-range communications subsystem **1020;** the keypad **1400** and the display **1600,** along with other input/output devices **1060, 1080, 1100** and **1120;** as well as memory devices **1160, 1180** and various other device subsystems **1201** (e.g., optical sensors (CCD), etc.). The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications or modules **1300A-1300N** on the device **1000,** such as software modules for performing various steps or operations. A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem 1001 designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device 1060, such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, NFC or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that the disclosure is not to be limited to the specific embodiments disclosed, and that modifications and embodiments are intended to be included.

## Claims

1. A communication system comprising:
a server (31) configured to provide data access based upon an authenticated logon;
a computer terminal (32) configured to access said server to receive a temporary authenticated logon identification ID for said server, the temporary authenticated logon ID comprising an Internet Protocol IP address associated with said server and an IP address associated with said computer terminal; and
a mobile wireless communications device (37) comprising
a housing (38),
a wireless transceiver (39) carried by said housing, said wireless transceiver being configured to wirelessly communicate with said server,
a sensor (40) carried by said housing, and
a controller (41) carried by said housing, said controller being coupled to said wireless transceiver and said sensor, said controller being configured to:
cause said sensor to wirelessly retrieve the temporary authenticated logon ID from said computer terminal, and
cause said wireless transceiver to wirelessly communicate logon and instruction data to said server to cause said server to temporarily provide data access via said computer terminal until said mobile wireless communications device moves away from said computer terminal, the logon data being based upon the temporary authenticated logon ID.

2. The communication system (30) of Claim 1 wherein said sensor comprises a first near field communication, NFC sensor; wherein said computer terminal (32) comprises a second NFC sensor; and wherein said first NFC sensor and said second NFC sensor are configured to communicate the temporary authenticated logon ID therebetween via NFC communications.

3. The communication system (30) of Claim 1 wherein said computer terminal (32) is associated with a display (33); wherein said computer terminal is further configured to cause said display to display an optical pattern (45) representing the temporary authenticated logon ID; wherein said sensor (40) comprises an optical sensor; and wherein said controller (41) is further configured to cause said optical sensor to read the optical pattern from said display and determine the temporary authenticated logon ID therefrom.

4. The communication system (30) of Claim 1 wherein the temporary authentication logon ID further comprises a pseudorandom password.

5. The communication system (30) of Claim 1 wherein the logon data comprises at least one of a password and a confirmation to provide data access via said computer terminal (32).

6. A mobile wireless communications device (37) for use with a server (31), the server being configured to provide data access based upon an authenticated logon, and a computer terminal, the computer terminal being configured to access the server and to receive a temporary authenticated logon identification, ID, for the server, and the computer terminal having a computer identifier associated therewith, the mobile wireless communications device comprising:
a housing (38);
a wireless transceiver (39) carried by said housing; said wireless transceiver being configured to wirelessly communicate with said server;
a sensor (40) carried by said housing; and
a controller (41) carried by said housing, the controller being coupled to said wireless transceiver and said sensor, the controller being configured to
cause said sensor to wirelessly retrieve the temporary authenticated logon ID from said computer terminal, the temporary authenticated logon ID comprising an Internet Protocol, IP, address associated with said server and an IP address associated with said computer terminal, and
cause said wireless transceiver to wirelessly communicate logon and instruction data to said server to cause said server to temporarily provide data access via said computer terminal until the mobile wireless communications device moves away from said computer terminal, the logon data being based upon the temporary authenticated logon ID.

7. The mobile wireless communications device (37) of Claim 6 wherein said sensor comprises a near field communication, NFC, sensor

8. The mobile wireless communications device (37) of Claim 6 wherein said sensor comprises an optical sensor; and wherein said controller is further configured to cause said optical sensor to read an optical pattern from a display associated with the computer terminal (32) and determine the temporary authenticated logon ID therefrom.

9. The mobile wireless communications device (37) of Claim 6 wherein the temporary authentication logon ID further comprises a pseudorandom password.

10. A communications method comprising:
accessing a server (31) from a computer terminal (32) over a wide area network (36) to receive a temporary authenticated logon identification, ID for the server, the server being configured to provide data access based upon an authenticated logon, and the computer terminal having a computer identifier associated therewith, wherein the temporary authenticated logon ID comprises an Internet Protocol, IP, address associated with said server and an IP address associated with said computer;
wirelessly retrieving the temporary authenticated logon ID from the computer terminal to a mobile wireless communications device (37); and
wirelessly communicating logon and instruction data from the mobile wireless communications device to the server via a wireless communications network (42) to cause the server to temporarily provide data access via the computer terminal until the mobile wireless communications device moves away from the computer terminal, the logon data being based upon the temporary authenticated logon ID.

11. The method of Claim 10 wherein said wirelessly retrieving comprises wirelessly retrieving the temporary authenticated logon ID from the computer terminal (32) to the mobile wireless communications device (37) via near field communication, NFC communications.

12. The method of Claim 10 further comprising causing the computer terminal (32) to display an optical pattern (45) representing the temporary authenticated logon ID on a display (33); and wherein said wirelessly retrieving comprises the mobile wireless communications device (37) reading the optical pattern from the display and determining the temporary authenticated logon ID from the optical pattern.

13. The method of Claim 10 wherein the temporary authentication logon ID further comprises a pseudorandom password.

## Patentansprüche

1. Ein Kommunikationssystem, das aufweist:
einen Server (31), der konfiguriert ist zum Vorsehen eines Datenzugriffs basierend auf einer authentifizierten Anmeldung;
ein Computer-Terminal (32), das konfiguriert ist zum Zugreifen auf den Server, um eine temporäre authentifizierte Anmeldungs-Identifikation (ID) für den Server zu empfangen, wobei die temporäre authentifizierte Anmeldungs-ID eine Internetprotokoll(IP- Internet Protocol)-Adresse, die mit dem Server assoziiert ist, und eine IP-Adresse aufweist, die mit dem Computer-Terminal assoziiert ist; und
eine mobile drahtlose Kommunikationsvorrichtung (37), die aufweist
ein Gehäuse (38),
einen drahtlosen Transceiver (39), der von dem Gehäuse getragen wird, wobei der drahtlose Transceiver konfiguriert ist zum drahtlosen Kommunizieren mit dem Server,
einen Sensor (40), der von dem Gehäuse getragen wird, und
eine Steuervorrichtung (41), die von dem Gehäuse getragen wird, wobei die Steuervorrichtung mit dem drahtlosen Transceiver und dem Sensor gekoppelt ist, wobei die Steuervorrichtung konfiguriert ist zum:
Veranlassen des Sensors, die temporäre authentifizierte Anmeldungs-ID von dem Computer-Terminal drahtlos abzurufen, und
Veranlassen des drahtlosen Transceivers, Anmeldungs- und Anweisungs-Daten drahtlos an den Server zu kommunizieren, um den Server zu veranlassen, temporär einen Datenzugriff über das Computer-Terminal vorzusehen, bis sich die mobile drahtlose Kommunikationsvorrichtung von dem Computer-Terminal weg bewegt, wobei die Anmeldungs-Daten auf der temporären authentifizierten Anmeldungs-ID basieren.

2. Das Kommunikationssystem (30) gemäß Anspruch 1, wobei der Sensor einen ersten Nahfeldkommunikations(NFC - near field communication)-Sensor aufweist; wobei das Computer-Terminal (32) einen zweiten NFC-Sensor aufweist; und wobei der erste NFC-Sensor und der zweite NFC-Sensor konfiguriert sind zum Kommunizieren der temporären authentifizierten Anmeldungs-ID zwischen ihnen über NFC-Kommunikationen.

3. Das Kommunikationssystem (30) gemäß Anspruch 1, wobei das Computer-Terminal (32) mit einer Anzeige (33) assoziiert ist; wobei das Computer-Terminal weiter konfiguriert ist, die Anzeige zu veranlassen, ein optisches Muster (45) anzuzeigen, das die temporäre authentifizierte Anmeldungs-ID repräsentiert; wobei der Sensor (40) einen optischen Sensor aufweist; und wobei die Steuervorrichtung (41) weiter konfiguriert ist, den optischen Sensor zu veranlassen, das optische Muster von der Anzeige zu lesen und daraus die temporäre authentifizierte Anmeldungs-ID zu bestimmen.

4. Das Kommunikationssystem (30) gemäß Anspruch 1, wobei die temporäre authentifizierte Anmeldungs-ID weiter ein pseudozufälliges Passwort aufweist.

5. Das Kommunikationssystem (30) gemäß Anspruch 1, wobei die Anmeldedaten zumindest eines aus einem Passwort und einer Bestätigung aufweisen, um einen Datenzugriff über das Computer-Terminal (32) vorzusehen.

6. Mobile drahtlose Kommunikationsvorrichtung (37) zur Verwendung mit einem Server (31), wobei der Server konfiguriert ist zum Vorsehen eines Datenzugriffs basierend auf einer authentifizierten Anmeldung, und einem Computer-Terminal, wobei das Computer-Terminal konfiguriert ist zum Zugreifen auf den Server und zum Empfangen einer temporären authentifizierten Anmeldungs-Identifikation (ID) für den Server, und das Computer-Terminal einen mit diesem assoziierten Computeridentifizierer hat, wobei die mobile drahtlose Kommunikationsvorrichtung aufweist:
ein Gehäuse (38);
einen drahtlosen Transceiver (39), der von dem Gehäuse getragen wird;
wobei der drahtlose Transceiver konfiguriert ist zum drahtlosen Kommunizieren mit dem Server;
einen Sensor (40), der von dem Gehäuse getragen wird; und
eine Steuervorrichtung (41), die von dem Gehäuse getragen wird, wobei die Steuervorrichtung mit dem drahtlosen Transceiver und dem Sensor gekoppelt ist, wobei die Steuervorrichtung konfiguriert ist zum
Veranlassen des Sensors, die temporäre authentifizierte Anmeldungs-ID von dem Computer-Terminal drahtlos abzurufen, wobei die temporäre authentifizierte Anmeldungs-ID eine Internetprotokoll(IP - Internet Protocol)-Adresse, die mit dem Server assoziiert ist, und eine IP-Adresse aufweist, die mit dem Computer-Terminal assoziiert ist, und
Veranlassen des drahtlosen Transceivers, Anmeldungs- und Anweisungs-Daten drahtlos an den Server zu kommunizieren, um den Server zu veranlassen, temporär einen Datenzugriff über das Computer-Terminal vorzusehen, bis sich die mobile drahtlose Kommunikationsvorrichtung von dem Computer-Terminal weg bewegt, wobei die Anmeldungs-Daten auf der temporären authentifizierten Anmeldungs-ID basieren.

7. Die mobile drahtlose Kommunikationsvorrichtung (37) gemäß Anspruch 6, wobei der Sensor einen Nahfeldkommunikations(NFC - near field communication)-Sensor aufweist.

8. Die mobile drahtlose Kommunikationsvorrichtung (37) gemäß Anspruch 6, wobei der Sensor einen optischen Sensor aufweist; und wobei die Steuervorrichtung weiter konfiguriert ist, den optischen Sensor zu veranlassen, ein optisches Muster von einer Anzeige zu lesen, die mit dem Computer-Terminal (32) assoziiert ist, und daraus die temporäre authentifizierte Anmeldungs-ID zu bestimmen.

9. Die mobile drahtlose Kommunikationsvorrichtung (37) gemäß Anspruch 6, wobei die temporäre authentifizierte Anmeldungs-ID weiter ein pseudozufälliges Passwort aufweist.

10. Ein Kommunikationsverfahren, das aufweist:
Zugreifen auf einen Server (31) von einem Computer-Terminal (32) über ein Weitbereichsnetzwerk (36), um eine temporäre authentifizierte Anmeldungs-Identifikation (ID) für den Server zu empfangen, wobei der Server konfiguriert ist zum Vorsehen eines Datenzugriffs basierend auf einer authentifizierten Anmeldung, und das Computer-Terminal einen mit diesem assoziierten Computeridentifizierer hat, wobei die temporäre authentifizierte Anmeldungs-ID eine Internetprotokoll(IP - Internet Protocol)-Adresse, die mit dem Server assoziiert ist, und eine IP-Adresse aufweist, die mit dem Computer assoziiert ist;
drahtloses Abrufen der temporären authentifizierten Anmeldungs-ID von dem Computer-Terminal an eine mobile drahtlose Kommunikationsvorrichtung (37); und
drahtloses Kommunizieren von Anmeldungs- und Anweisungs-Daten von der mobilen drahtlosen Kommunikationsvorrichtung an den Server über ein drahtloses Kommunikationsnetzwerk (42), um den Server zu veranlassen, temporär einen Datenzugriff über das Computer-Terminal vorzusehen, bis sich die mobile drahtlose Kommunikationsvorrichtung von dem Computer-Terminal weg bewegt, wobei die Anmeldungs-Daten auf der temporären authentifizierten Anmeldungs-ID basieren.

11. Das Verfahren gemäß Anspruch 10, wobei das drahtlose Abrufen aufweist ein drahtloses Abrufen der temporären authentifizierten Anmeldungs-ID von dem Computer-Terminal (32) an die mobile drahtlose Kommunikationsvorrichtung (37) über Nahfeldkommunikations(NFC - near field communication)-Kommunikationen.

12. Das Verfahren gemäß Anspruch 10, das weiter aufweist ein Veranlassen des Computer-Terminals (32) zum Anzeigen eines optischen Musters (45), das die temporäre authentifizierte Anmeldungs-ID repräsentiert, auf einer Anzeige (33); und wobei das drahtlose Abrufen aufweist ein Lesen, durch die mobile drahtlose Kommunikationsvorrichtung (37), des optischen Musters von der Anzeige und Bestimmen der temporären authentifizierten Anmeldungs- ID aus dem optischen Muster.

13. Das Verfahren gemäß Anspruch 10, wobei die temporäre authentifizierte Anmeldungs-ID weiter ein pseudozufälliges Passwort aufweist.

## Revendications

1. Système de communication comprenant :
un serveur (31) configuré pour donner accès à des données en fonction d'une ouverture de session avec authentification ;
un terminal informatique (32) configuré pour accéder audit serveur afin de recevoir un code d'identification temporaire pour ouverture de session avec authentification sur ledit serveur, le code d'identification temporaire pour ouverture de session avec authentification comprenant une adresse de protocole internet IP associée audit serveur et une adresse IP associée audit terminal informatique ; et
un dispositif de communication mobile sans fil (37) comprenant :
un boîtier (38) ;
un émetteur-récepteur sans fil (39) supporté par ledit boîtier, ledit émetteur-récepteur sans fil étant configuré pour communiquer par sans fil avec ledit serveur ;
un capteur (40) supporté par ledit boîtier ; et
un contrôleur (41) supporté par ledit boîtier, ledit contrôleur étant couplé audit émetteur-récepteur sans fil et audit capteur, ledit contrôleur étant configuré pour :
commander audit capteur d'obtenir par sans fil le code d'identification temporaire pour ouverture de session avec authentification auprès dudit terminal informatique ; et
commander audit émetteur-récepteur sans fil de communiquer par sans fil des données d'ouverture de session et d'instructions audit serveur, afin de commander audit serveur de fournir temporairement un accès aux données via ledit terminal informatique jusqu'à ce que ledit dispositif de communication mobile sans fil s'éloigne dudit terminal informatique, les données d'ouverture de session étant fondées sur le code d'identification temporaire pour ouverture de session avec authentification.

2. Système de communication (30) selon la revendication 1, dans lequel ledit capteur comprend un premier capteur de communication en champ proche, NFC pour « *Near Field Communication* » ; dans lequel ledit terminal informatique (32) comprend un second capteur NFC ; et dans lequel ledit premier capteur NFC et ledit second capteur NFC sont configurés pour échanger entre eux, par des communications NFC, le code d'identification temporaire pour ouverture de session avec authentification.

3. Système de communication (30) selon la revendication 1, dans lequel ledit terminal informatique (32) est associé à un écran d'affichage (33) ; dans lequel ledit terminal informatique est en outre configuré pour commander audit écran d'affichage d'afficher un motif optique (45) représentant le code d'identification temporaire pour ouverture de session avec authentification ; dans lequel ledit capteur (40) est constitué d'un capteur optique ; et dans lequel ledit contrôleur (41) est en outre configuré pour commander audit capteur optique de lire le motif optique sur ledit écran d'affichage et pour en déterminer le code d'identification temporaire pour ouverture de session avec authentification.

4. Système de communication (30) selon la revendication 1, dans lequel le code d'identification temporaire pour ouverture de session avec authentification comprend en outre un mot de passe pseudo-aléatoire.

5. Système de communication (30) selon la revendication 1, dans lequel les données d'ouverture de session comprennent soit un mot de passe, soit une confirmation pour donner accès aux données via ledit terminal informatique (32).

6. Dispositif de communication mobile sans fil (37) destiné à être utilisé avec un serveur (31), le serveur étant configuré pour donner accès à des données en fonction d'une ouverture de session avec authentification, et un terminal informatique, le terminal informatique étant configuré pour accéder audit serveur afin de recevoir un code d'identification temporaire pour ouverture de session avec authentification sur ledit serveur et le terminal informatique étant associé à un identificateur d'ordinateur, le dispositif de communication mobile sans fil comprenant :
un boîtier (38) ;
un émetteur-récepteur sans fil (39) supporté par ledit boîtier, ledit émetteur-récepteur sans fil étant configuré pour communiquer par sans fil avec ledit serveur ;
un capteur (40) supporté par ledit boîtier ; et
un contrôleur (41) supporté par ledit boîtier, ledit contrôleur étant couplé audit émetteur-récepteur sans fil et audit capteur, ledit contrôleur étant configuré pour :
commander audit capteur d'obtenir par sans fil le code d'identification temporaire pour ouverture de session avec authentification auprès dudit terminal informatique, le code d'identification temporaire pour ouverture de session avec authentification comprenant une adresse de protocole internet IP associée audit serveur et une adresse IP associée audit terminal informatique ; et
commander audit émetteur-récepteur sans fil de communiquer par sans fil des données d'ouverture de session et d'instructions audit serveur, afin de commander audit serveur de fournir temporairement un accès aux données via ledit terminal informatique jusqu'à ce que ledit dispositif de communication mobile sans fil s'éloigne dudit terminal informatique, les données d'ouverture de session étant fondées sur le code d'identification temporaire pour ouverture de session avec authentification.

7. Dispositif de communication mobile sans fil (37) selon la revendication 6, dans lequel ledit capteur comprend un premier capteur de communication en champ proche, NFC pour « *Near Field Communication* ».

8. Dispositif de communication mobile sans fil (37) selon la revendication 6, dans lequel ledit capteur est constitué d'un capteur optique ; et dans lequel ledit contrôleur est en outre configuré pour commander audit capteur optique de lire un motif optique affiché sur un écran d'affichage associé au terminal informatique (32) et pour en déterminer le code d'identification temporaire pour ouverture de session avec authentification.

9. Dispositif de communication mobile sans fil (37) selon la revendication 6, dans lequel le code d'identification temporaire pour ouverture de session avec authentification comprend en outre un mot de passe pseudo-aléatoire.

10. Procédé de communication, comprenant les étapes consistant à :
accéder à un serveur (31), à partir d'un terminal informatique (32) et via un réseau étendu (36), afin de recevoir un code d'identification temporaire pour ouverture de session avec authentification sur ledit serveur, le serveur étant configuré pour donner accès à des données en fonction d'une ouverture de session avec authentification et le terminal informatique étant associé à un identificateur d'ordinateur, le code d'identification temporaire pour ouverture de session avec authentification comprenant une adresse de protocole internet IP associée audit serveur et une adresse IP associée audit ordinateur ;
recevoir par sans fil le code d'identification temporaire pour ouverture de session avec authentification en provenance du terminal informatique, sur un dispositif de communication mobile sans fil (37) ; et
communiquer par sans fil des données d'ouverture de session et d'instructions audit serveur, via un réseau de communication sans fil (42) afin de commander audit serveur de fournir temporairement un accès aux données via ledit terminal informatique jusqu'à ce que ledit dispositif de communication mobile sans fil s'éloigne dudit terminal informatique, les données d'ouverture de session étant fondées sur le code d'identification temporaire pour ouverture de session avec authentification.

11. Procédé selon la revendication 10, dans lequel ladite étape de réception sans fil comprend l'étape consistant à obtenir par sans fil, par le dispositif de communication mobile sans fil (37), le code d'identification temporaire pour ouverture de session avec authentification auprès du terminal informatique (32), via une communication en champ proche, NFC pour « *Near Field Communication* ».

12. Procédé selon la revendication 10, comprenant en outre l'étape consistant à commander au terminal informatique (32) d'afficher un motif optique (45) représentant le code d'identification temporaire pour ouverture de session avec authentification ; dans lequel ladite étape de réception par sans fil comprend l'étape consistant à lire par ledit dispositif de communication mobile sans fil (37) le motif optique sur ledit écran d'affichage et à déterminer le code d'identification temporaire pour ouverture de session avec authentification à partir du motif optique.

13. Procédé selon la revendication 10, dans lequel le code d'identification temporaire pour ouverture de session avec authentification comprend en outre un mot de passe pseudo-aléatoire.
